# DEMANDE DE BREVET EUROPEEN

(11) **EP 2 439 937 A1**
(43) Date de publication de la demande: **11.04.2012**
(21) Numéro de dépôt: 11184707.5
(22) Date de dépôt: 11.10.2011
(51) Int. Cl.: H04N 5/445, G06F 3/01

(54) **Procédé de communication d'une grande quantité d'informations sur un écran unique**

(30) Priorité: 11.10.2010 FR 1058243
(71) Demandeur: FRANCE TELECOM, 75015 Paris (FR)
(72) Inventeur: Marc, Cécile, 35000 RENNES (FR); Ledunois, Valérie, 35890 LAILLE (FR)
(74) Mandataire: Saint-Marc-Etienne, Christophe Andréas

(57) **Abrégé**

L'invention concerne un procédé de communication d'informations, incluant une étape de segmentation desdites informations en sous-ensembles associés chacun à une image IMi (pour i=1 à N).

Le procédé selon l'invention inclut une étape de représentation sur un écran d'un objet prédéterminé CO et d'une pluralité d'images IMi (pour i=1 à N), chacune desdites images ayant un côté relié à un contour dudit objet.

L'invention permet de représenter un nombre d'images bien plus important que ce qui est réalisable dans l'état actuel de la technique. En outre, le fait que les images IMi (pour i=1 à N) soient toutes reliées à un même objet CO permet à l'utilisateur de visualiser sur un même écran TSCR la totalité des images IMi (pour i=1 à N) sous la forme d'un ensemble fini formant un tout cohérent.

## Description

### 1. Domaine de l'invention

L'invention concerne un procédé de communication d'informations, incluant une étape de segmentation desdites informations en sous-ensembles associés chacun à une image.

De tels procédés sont couramment utilisés dans le domaine des télécommunications, et plus précisément en matière de diffusion de programmes audiovisuels où de récentes évolutions techniques ont permis de mettre simultanément à disposition d'utilisateurs des dizaines, voire des centaines de canaux de diffusion de programmes audiovisuels.

### 2. Art antérieur

Pour représenter une telle abondance de programmes, différents procédés sont couramment mis en oeuvre dans l'état actuel de la technique, consistant à inclure dans chaque sous-ensemble toutes les données relatives à un programme audiovisuel donné, telles son heure de début, sa durée, une description sommaire de son contenu, le cas échéant une liste d'acteurs prenant part au programme concerné, etc., et à afficher simultanément à l'écran une pluralité d'images représentatives chacune d'un programme, l'utilisateur étant muni d'un moyen pour faire défiler les images et/ou les écrans pour accéder à des images non-représentées sur l'écran. En règle générale, chaque image inclut une vue statique ou dynamique extraite du programme audiovisuel qu'elle représente et une sélection d'une telle image par l'utilisateur donne à accès aux données relatives au programme associé à l'image sélectionnée.

Selon une première technique connue, les images sont groupées sous forme de mosaïques successives, chaque mosaïque ayant la surface de l'écran et contenant un nombre prédéterminé d'images présentant des dimensions suffisamment importantes pour qu'un utilisateur puisse en appréhender le contenu sans ambiguïté, l'utilisateur pouvant passer d'une mosaïque à une autre pour obtenir des informations concernant d'autres programmes que ceux qui sont affichés à l'écran.

Selon une deuxième technique connue, les images sont agencées en une sorte de carrousel, une fenêtre d'affichage d'une image dite active étant jouxtée par une suite de représentations en perspective d'images inactives que l'utilisateur peut successivement amener jusqu'à la fenêtre d'affichage pour que leur contenu y soit affiché en vue de face.

### 3. Objectifs de l'invention

Dans les deux techniques connues, dès que le nombre de programmes dépasse quelques dizaines, il devient impossible de représenter simultanément toutes les images représentant l'ensemble des programmes mis à disposition de l'utilisateur tout en veillant à ce que chaque image présente des dimensions suffisamment importantes pour qu'un utilisateur puisse en appréhender le contenu sans ambiguïté. Or, une telle abondance de programmes n'a d'intérêt pour un utilisateur que si ces programmes peuvent effectivement lui être présentés de façon à ce qu'il puisse en avoir une vue exhaustive afin d'opérer une sélection véritablement pertinente. Si tel n'est pas le cas, l'utilisateur ne pourra pas évaluer le volume total d'informations qu'il devra scruter pour connaître effectivement tous les programmes qui lui sont proposés, et, découragé, se contentera le plus souvent de ne passer en revue qu'un nombre restreint de programmes, et ne consultera ainsi qu'une portion de ce qui lui est effectivement offert, risquant de manquer d'autres programmes qui pourraient pourtant présenter pour lui un plus grand intérêt que ceux qu'il aura passés en revue.

Une telle situation n'est satisfaisante ni pour l'utilisateur, qui risque d'éprouver un sentiment de frustration devant une offre pléthorique dont il saura qu'elle est sous-exploitée, ni pour un opérateur procédant à la diffusion d'une telle offre dont de larges portions risquent de ne pas trouver de public, et d'être donc diffusées à perte.

L'invention apporte une solution qui ne présente pas les inconvénients décrits plus haut, en proposant un procédé permettant de faire apparaître sur un unique écran une représentation exhaustive d'un ensemble d'informations, quand bien même cet ensemble concernerait un nombre très important de sujets tels des programmes audiovisuels.

### 4. Exposé de l'invention

En effet, selon un aspect fonctionnel, l'invention concerne un procédé conforme au paragraphe introductif, caractérisé en ce qu'il inclut une étape de représentation sur un écran d'un objet prédéterminé et d'au moins une tranche de chacune des images associées aux sous-ensembles obtenus à l'issue de l'étape de segmentation, chacune desdites images ayant un côté relié à un contour dudit objet.

L'invention permet à l'utilisateur de visualiser les images selon une orientation tout-à-fait originale, puisqu'elles lui sont en quelque sorte présentées en vue de côté, le côté relié à l'objet déterminé étant alors constitué par une tranche de l'image. Ceci permet de représenter un nombre d'images bien plus important que ce qui est réalisable lorsque les images sont représentées en vue de face. Le fait que les images soient toutes reliées à un même objet permet à l'utilisateur de visualiser sur un même écran la totalité des images sous la forme d'un ensemble fini formant un tout cohérent autour de l'objet prédéterminé qui occupe ainsi une position essentiellement centrale. L'utilisateur peut ainsi évaluer en un seul coup d'oeil la quantité totale d'informations qui est mise à sa disposition et optimiser ainsi le processus qu'il mettra en oeuvre pour consulter ces informations.

Le contour de l'objet prédéterminé pourra être un contour fermé, présentant par exemple la forme d'un cercle, d'une ellipse, d'un carré, d'un rectangle, d'un triangle, etc., mais le contour pourra également être un contour ouvert et présenter par exemple la forme d'une spirale, ce qui permettra d'y relier un nombre d'images encore plus important tout en permettant d'en visualiser l'ensemble sur un même écran.

Selon un mode de mise en oeuvre particulier de l'invention, un procédé tel que décrit ci-dessus inclut en outre une étape de détection d'une action d'un utilisateur visant à faire pivoter la représentation d'une image donnée autour d'un axe de liaison de ladite image donnée avec le contour de l'objet prédéterminé, et une étape de mise en rotation de la représentation de ladite image donnée autour dudit axe de liaison.

Ce mode de mise en oeuvre de l'invention permet en quelque sorte à l'utilisateur d'imprimer un mouvement de rotation à la tranche d'une image qu'il aura sélectionnée.

Selon une variante de ce mode de mise en oeuvre, le procédé décrit ci-dessus inclut en outre une étape de mise en rotation de l'objet prédéterminé dans un sens de rotation identique au sens de la rotation imprimée à ladite image donnée.

Cette variante de mise en oeuvre de l'invention permet en quelque sorte à l'utilisateur d'imprimer un mouvement de rotation à l'objet prédéterminé ainsi qu'à l'ensemble des images qui y sont reliées, au moyen de la mise en mouvement d'une seule image donnée.

D'autres moyens de mise en rotation de l'objet prédéterminé et des images qui y sont reliées pourront être mis en oeuvre dans d'autres variantes.

Le procédé décrit plus haut pourra par exemple inclure une étape de détection d'un déplacement d'une zone dite d'action où une action est exercée de façon continue par de l'utilisateur et une étape de mise en rotation de l'objet prédéterminé dans un sens de rotation compatible avec le sens du déplacement de la zone d'action.

Ainsi, si l'écran est un écran tactile, il suffira à l'utilisateur de tracer une trajectoire en arc de cercle sur l'écran, par exemple au moyen d'une souris pilotant un curseur ou au moyen d'un doigt si l'écran est tactile, pour imprimer à l'objet prédéterminé une rotation dans le sens de l'arc de cercle suivi par le curseur ou le doigt.

Selon un mode de mise en oeuvre particulier de l'invention, qui pourra être mis en oeuvre alternativement ou cumulativement avec le précédent, un procédé tel que décrit plus haut inclut en outre une étape de détection d'une action d'un utilisateur visant à écarter de la représentation d'une image donnée la représentation d'au moins une image voisine, et une étape de mise en rotation de la représentation de ladite image voisine autour de son axe de liaison avec le contour de l'objet prédéterminé dans une direction éloignant l'image voisine de ladite image donnée.

Une telle action pourra consister simplement en une sélection par l'utilisateur d'une image donnée, mais aussi en un mouvement d'écartement imprimé par l'utilisateur aux représentations des images voisines de l'image donnée, afin de faciliter la consultation ou la sélection de ladite image donnée.

Selon encore un autre mode de mise en oeuvre particulier de l'invention, qui pourra être mis en oeuvre alternativement ou cumulativement avec les précédents, un procédé tel que décrit plus haut inclut en outre une étape d'affichage, à l'intérieur du contour de l'objet prédéterminé, d'un indicateur d'une propriété commune aux images qui y sont reliées.

Un tel mode de mise en oeuvre permet de paramétrer une sélection des images reliées à l'objet prédéterminé, puisque ces images doivent toutes avoir une propriété commune associée à l'indicateur, qui pourra avantageusement être choisi par l'utilisateur.

Dans ce cas, le procédé décrit ci-dessus inclura avantageusement une étape de réglage par l'utilisateur d'une valeur dudit indicateur, une étape d'identification des images ayant en commun la propriété associée à l'indicateur et une représentation des seules images ainsi sélectionnées.

La valeur de l'indicateur sera de préférence exprimée sous forme de chiffres ou de caractères littéraux.

Cet indicateur pourra être de nature absolue, comme par exemple une heure courante ou différée en correspondance avec laquelle l'utilisateur souhaite connaître l'offre de programmes. Dans un tel exemple, seules seront ainsi affichées les images représentant des programmes en cours de diffusion à l'heure choisie par l'utilisateur.

La sélection de l'heure courante permettra à l'utilisateur de choisir un programme en vue d'une consultation immédiate, tandis que la sélection d'une heure différée permettra à l'utilisateur de choisir à l'avance un programme qu'il regardera à ladite heure différée si celle-ci est postérieure à l'heure courante, ou de savoir quels programmes ont été diffusés à l'heure différée si celle-ci est antérieure à l'heure courante.

L'indicateur pourra aussi être de nature relative, comme un libellé d'une catégorie dans laquelle seuls pourront être classés un certain nombre de programmes, par exemple une catégorie « comédie » ou « drame » dans laquelle n'entreront que des films ou des enregistrements de pièces de théâtre.

Une procédure de réglage de la valeur de l'indicateur pourra être déclenchée par l'utilisateur au moyen d'une action prédéterminée, par exemple par maintien d'une pression, pendant une durée supérieure à une durée de temporisation prédéfinie, sur la zone ou l'indicateur est affiché.

Selon un aspect matériel, l'invention concerne également un terminal de communication destiné à restituer des informations, incluant des moyens de segmentation desdites informations en sous-ensembles associés chacun à une image, et des moyens de représentation sur un écran d'un objet prédéterminé et d'au moins une tranche de chacune desdites images, chacune desdites images ayant un côté relié à un contour dudit objet.

Selon un autre aspect matériel, l'invention concerne également un système de communication incluant au moins un terminal conforme à la description qui précède et un serveur de diffusion de programmes audiovisuels destiné à fournir audit terminal des informations relatives auxdits programmes.

Selon un autre aspect matériel, l'invention concerne également un programme d'ordinateur caractérisé en ce qu'il comprend des instructions de code de programme pour la mise en oeuvre d'une étape d'émission incluse dans un procédé tel que décrit plus haut lorsque ce programme est exécuté par un processeur.

### 5. Liste des figures

D'autres caractéristiques et avantages de l'invention apparaîtront plus clairement à la lecture de la description suivante d'un mode de réalisation particulier, donné à titre de simple exemple illustratif et non-limitatif, et des dessins annexés, parmi lesquels :
- la figure 1 est un diagramme fonctionnel qui représente un système de communication dans lequel l'invention est mise en oeuvre;
- les figures 2A et 2B sont des vues d'écran représentant respectivement un ensemble d'informations mis à disposition d'un utilisateur selon un mode de mise en oeuvre particulier de l'invention, et la sélection d'une image représentative d'un sous-ensemble sélectionné au sein de cet ensemble ;
- les figures 3A et 3B sont des vues d'écran représentant un ensemble d'informations mis à disposition d'un utilisateur selon un mode de mise en oeuvre particulier de l'invention ;
- les figures 4A et 4B sont des vues d'écran représentant un ensemble d'informations mis à disposition d'un utilisateur selon un autre mode de mise en oeuvre particulier de l'invention ;
- la figure 5 représente un forme particulière d'affichage d'un ensemble d'informations conforme à l'invention.

### 6. Description d'un mode de réalisation de l'invention

### 6.1 Principe général

Le principe général de l'invention repose sur un affichage d'images selon une orientation tout-à-fait originale, puisqu'elles sont en quelque sorte présentées en vue de côté, le côté relié à l'objet déterminé étant alors constitué par une tranche de l'image. Ceci permet de représenter un nombre d'images bien plus important que ce qui est réalisable lorsque les images sont représentées en vue de face. Le fait que les images soient toutes reliées à un même objet permet à l'utilisateur de visualiser sur un même écran la totalité des images sous la forme d'un ensemble fini formant un tout cohérent autour de l'objet prédéterminé qui occupe ainsi une position essentiellement centrale. L'utilisateur peut ainsi évaluer en un seul coup d'oeil la quantité totale d'informations qui est mise à sa disposition et optimiser ainsi le processus qu'il mettra en oeuvre pour consulter ces informations.

### 6.2 Description d'un mode de réalisation

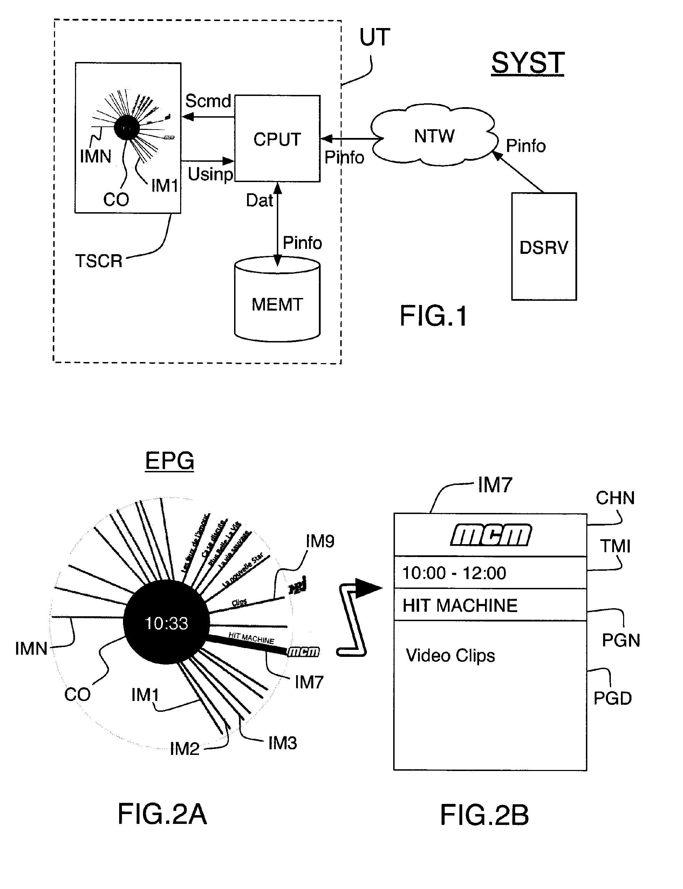

La **FIG.1** illustre un mode de réalisation de l'invention au sein d'un système de télécommunication SYST, qui inclut un terminal UT et un serveur de diffusion DSRV de programmes audiovisuels destiné à fournir audit terminal UT, *via* un réseau de communication NTW qui sera de préférence conforme au protocole Internet, des informations Pinfo relatives auxdits programmes, comme par exemple, les heures de début et de fin de chacun de ces programmes, un résumé descriptif de son contenu, etc. Ces informations parviennent à une unité centrale CPUT du terminal UT et sont enregistrées dans une mémoire de masse MEMT, par exemple réalisée sous forme d'un ou plusieurs circuits intégrés, ou encore sous forme de disque dur, au sein dudit terminal UT.

Le terminal UT est muni d'un écran TSCR destiné à restituer à un utilisateur dudit terminal sous forme d'un guide de programmes EPG les informations reçues du serveur de diffusion DSRV, et inclut des moyens de segmentation desdites informations en sous-ensembles associés chacun à une image destinée à apparaître dans ledit guide de programme EPG. Dans l'exemple représenté ici, les moyens de segmentation sont localisés dans l'unité centrale CPUT, qui, après avoir chargé un programme contenant des instructions en ce sens, extrait sélectivement de la mémoire de masse MEMT des informations Dat relatives à chaque programme pour construire un ensemble de signaux de commande Scmd définissant l'image d'ensemble qui doit être affichée sur l'écran TSCR, laquelle image d'ensemble incluant un objet prédéterminé CO et une pluralité d'images IM1...IMN, chacune desdites images ayant un côté relié à un contour dudit objet CO et étant représentative d'un programme particulier.

Dans certaines applications, les images IM1...IMN pourront être représentatives de canaux de communication, tels des chaînes de télévision et regrouper chacune des informations relatives à une pluralité de programmes diffusés par le canal associé à l'image considérée.

L'écran TSCR est capable d'interaction avec un utilisateur du terminal UT. A cet effet, il pourra être apte à coopérer avec un périphérique de type « souris » » pour afficher un curseur piloté par l'utilisateur au moyen de ladite souris. Dans un mode de réalisation particulièrement avantageux de l'invention, l'écran TSCR est un écran tactile et apte à recevoir par l'intermédiaire de la surface de l'écran des commandes de la part de l'utilisateur et à répercuter vers ces commandes vers l'unité centrale CPUT sous forme de signaux d'entrée Usinp.

Les **FIGs. 2A** et **2B** sont des vues d'écran représentant respectivement un ensemble d'informations affiché sous forme d'un guide de programmes EPG conforme à la description qui précède, et la sélection d'une image IMS représentative d'un programme sélectionné au sein de cet ensemble.

Dans le mode de mise en oeuvre de l'invention représenté en **FIG.2A**, le guide de programme EPG présente à l'utilisateur N images IM1, IM2, IM3...IMN, chacune ayant un côté relié à un contour d'un objet prédéterminé CO, lequel contour est ici fermé et prend la forme d'un cercle. En outre, le contour de l'objet prédéterminé CO inclut ici un indicateur, dans cet exemple un indicateur horaire (10:33). Toutes les images IMi (pour i=1 à N) ont en commun une propriété liée à la valeur de cet indicateur, en ceci que chacune d'entre elles est représentative d'un programme particulier en cours de diffusion à l'heure indiquée par l'indicateur horaire (10:33).

Cet indicateur, dont la valeur est réglable par l'utilisateur, permet donc de paramétrer une sélection des images à afficher, puisque seules sont ainsi affichées les images représentant des programmes en cours de diffusion à l'heure (10:33) choisie par l'utilisateur. Cette heure peut être une heure courante, ce qui permettra à l'utilisateur de choisir un programme en vue d'une consultation immédiate. La valeur de l'indicateur choisie par l'utilisateur pourra également être une heure quelconque, différée par rapport à l'heure courante, en correspondance avec laquelle l'utilisateur souhaite connaître l'offre de programmes, afin de choisir à l'avance un programme qu'il regardera à ladite heure différée si celle-ci est postérieure à l'heure courante, ou de savoir quels programmes ont été diffusés à l'heure différée si celle-ci est antérieure à l'heure courante.

Dans d'autres modes de mise en oeuvre non-représentés ici, l'indicateur pourra aussi être de nature relative, comme un libellé d'une catégorie dans laquelle seuls pourront être classés un certain nombre de programmes, par exemple une catégorie « comédie » ou « drame » dans laquelle n'entreront que des films ou des enregistrements de pièces de théâtre.

Le réglage de la valeur de l'indicateur pourra être réalisé par l'utilisateur au moyen d'une action prédéterminée, par exemple par maintien d'une pression, pendant une durée supérieure à une durée de temporisation prédéfinie, sur la zone ou l'indicateur (10:33) est affiché.

Dans le mode de mise en oeuvre de l'invention représenté en **FIG.2A**, les images IMi (pour i=1 à N) sont représentées sous forment de segments de droite qui en représentent les tranches. Chaque image représente un programme audiovisuel diffusé sur une chaîne de télévision correspondante à l'heure (10:33) indiquée par l'indicateur affiché dans l'objet CO. Chaque image IMi (pour i=1 à N) est accompagnée d'un intitulé du programme dont elle est représentative et/ou d'un logo représentant la chaîne de télévision correspondante, lorsque ces informations sont disponibles. Ainsi, l'image IM9 est accompagnée de l'intitulé « Clips » et d'un logo représentant la chaîne « NRJ » (marque déposée).

Les **FIGs.2A** et **2B**, illustrent le fonctionnement du procédé conforme à l'invention consécutivement à une sélection de l'image IM7 opérée dans cet exemple par un utilisateur du guide de programme EP. Une telle sélection, représentée graphiquement par une représentation en surépaisseur de l'image IM7 sur la **FIG.2A**, donne lieu à une extraction de cette image IM7 depuis le guide de programme EPG, c'est-à-dire que cette image est, dans un premier temps, détachée de l'objet prédéterminé CO, puis subit une rotation permettant de rendre la face de l'image coplanaire avec le plan de l'écran ainsi que montré en **FIG.2****B.** La représentation de l'image IM7 dans cette configuration permet de rendre apparentes diverses rubriques d'informations, dont par exemple une rubrique d'identification CHN identifiant la chaîne de télévision « MCM » (marque déposée) correspondant au programme dont l'image IM7 est représentative, une rubrique horaire TMI donnant les horaires « 10:00 - 12:00 » de début et de fin du programme dont l'image IM7 est représentative, une rubrique de titre PGN donnant un intitulé « HIT MACHINE » du programme dont l'image IM7 est représentative, et une rubrique descriptive PGD donnant des informations « Video Clips » relatives au contenu du programme dont l'image IM7 est représentative.

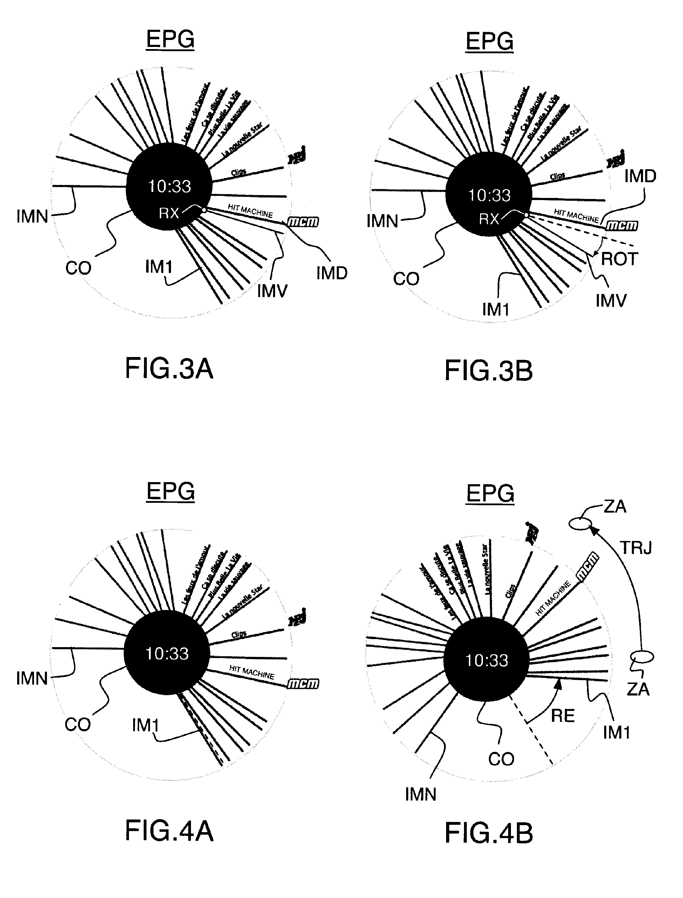

Les **FIGs.3A** et **3B**, illustrent un mode de fonctionnement particulier du guide de programmes EPG conforme à l'invention, permettant à un utilisateur d'imprimer un mouvement de rotation à la tranche d'une image qu'il a sélectionnée. Dans l'exemple représenté ici, une action d'un utilisateur visant à faire pivoter la représentation de l'image IMV autour d'un axe RX liant ladite image IMV avec le contour de l'objet prédéterminé CO est détectée et suivie d'une exécution d'une rotation ROT de la représentation de ladite image IMV autour dudit axe de liaison RX, ainsi que représenté en **FIG.3B**.

Selon une variante de ce mode de fonctionnement, si l'utilisateur poursuit son action de rotation, la rotation de l'image IMV pourra entraîner une mise en rotation de l'objet prédéterminé CO dans un sens de rotation identique au sens de la rotation ROT imprimée à ladite image IMV, provoquant ainsi une rotation de l'ensemble du guide de programme EPG (non-représentée ici).

Cette variante de l'invention permet donc d'imprimer un mouvement de rotation à l'objet prédéterminé CO ainsi qu'à l'ensemble des images IMi (pour i=1 à N) qui y sont reliées, au moyen de la mise en mouvement d'une seule image IMV.

Selon une autre variante de ce mode de fonctionnement, l'utilisateur pourra exercer une action visant à écarter de la représentation d'une image donnée IMD la représentation d'au moins une image voisine IMV, et une étape de mise en rotation ROT de la représentation de ladite image voisine IMV autour de son axe de liaison RX avec le contour de l'objet prédéterminé CO dans une direction éloignant l'image voisine de ladite image donnée IMD.

Dans une telle variante, la mise en rotation de l'image IMV n'est pas consécutive à la sélection de cette image IMV, mais de celle de l'image IMD dont l'image IMV et voisine. Toutefois, l'action d'écartement exercée par l'utilisateur pourra aussi consister en un mouvement d'écartement imprimé par l'utilisateur aux représentations des images voisines de l'image donnée IMD. En toute hypothèse, la mise en rotation ROT de la représentation de l'image IMV voisine de l'image donnée IMD permettra de faciliter la consultation ou la sélection de ladite image donnée IMD.

Les **FIGs.4A** et **4B**, illustrent une telle autre variante, incluant une étape de détection d'un déplacement d'une zone ZA dite d'action où une action est exercée de façon continue par de l'utilisateur et une étape de mise en rotation RE de l'objet prédéterminé CO dans un sens de rotation compatible avec le sens du déplacement de la zone d'action.

Ainsi, il suffira à l'utilisateur de tracer une trajectoire TRJ en arc de cercle sur l'écran, par exemple au moyen d'une souris pilotant un curseur ou au moyen d'un doigt si l'écran est tactile, pour imprimer à l'objet prédéterminé CO, voire à l'ensemble du guide de programmes EPG comme représenté ici, une rotation RE dans le sens de la trajectoire en arc de cercle TRJ suivie par la zone d'action ZA définie par le curseur ou le doigt.

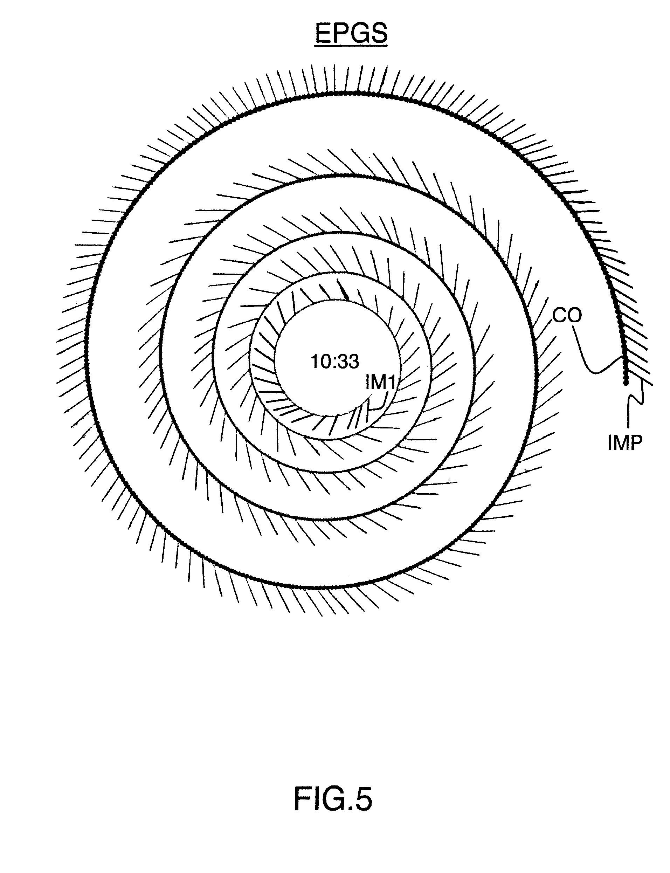

La FIG.5 illustre un mode de réalisation particulier de l'invention dans lequel un guide de programmes EPGS est construit sur base d'un objet prédéterminé CO qui présente un contour ouvert et revêt en l'espèce la forme d'une spirale, ce qui permet d'y relier un nombre P d'images IMi (pour i=1 à P) encore plus important tout en permettant d'en visualiser l'ensemble sur un même écran.

## Revendications

1. Procédé de communication d'informations, incluant :
- une étape de segmentation desdites informations en sous-ensembles associés chacun à une image,
- une étape de représentation sur un écran d'un objet prédéterminé et d'au moins une tranche de chacune desdites images, chacune desdites images ayant un côté relié à un contour dudit objet,
- une étape de détection d'une action d'un utilisateur visant à faire pivoter la représentation d'une image donnée autour d'un axe de liaison de ladite image donnée avec le contour de l'objet prédéterminé, et
- une étape de mise en rotation de la représentation de ladite image donnée autour dudit axe de liaison.

2. Procédé selon la revendication 1, **caractérisé en ce que** le contour de l'objet prédéterminé est un contour ouvert.

3. Procédé selon la revendication 1, **caractérisé en ce qu'**il inclut en outre une étape de mise en rotation de l'objet prédéterminé dans un sens de rotation identique au sens de la rotation imprimée à ladite image donnée.

4. Procédé selon la revendication 1, **caractérisé en ce qu'**il inclut en outre une étape de détection d'un déplacement d'une zone dite d'action où une action est exercée de façon continue par l'utilisateur et une étape de mise en rotation de l'objet prédéterminé dans un sens de rotation compatible avec le sens du déplacement de la surface d'action.

5. Procédé selon la revendication 1, **caractérisé en ce qu'**il inclut en outre une étape de détection d'une action d'un utilisateur visant à écarter de la représentation d'une image donnée la représentation d'au moins une image voisine, et une étape de mise en rotation de la représentation de ladite image voisine autour de son axe de liaison avec le contour de l'objet prédéterminé dans une direction éloignant l'image voisine de ladite image donnée.

6. Procédé selon l'une des revendications 1 ou 2, **caractérisé en ce qu'**il inclut en outre une étape d'affichage, à l'intérieur du contour de l'objet prédéterminé, d'un indicateur d'une propriété commune aux images qui y sont reliées.

7. Procédé selon la revendication 6, **caractérisé en ce qu'**il inclut une étape de réglage par l'utilisateur d'une valeur dudit indicateur, une étape d'identification des images ayant en commun la propriété associée à l'indicateur et une représentation des seules images ainsi sélectionnées.

8. Terminal de communication destiné à restituer des informations, incluant :
- des moyens de segmentation desdites informations en sous-ensembles associés chacun à une image,
- des moyens de représentation sur un écran d'un objet prédéterminé et d'au moins une tranche de chacune desdites images, chacune desdites images ayant un côté relié à un contour dudit objet,
- des moyens de détection d'une action d'un utilisateur visant à faire pivoter la représentation d'une image donnée autour d'un axe de liaison de ladite image donnée avec le contour de l'objet prédéterminé, et
- des moyens de mise en rotation de la représentation de ladite image donnée autour dudit axe de liaison.

9. Système de communication incluant au moins un terminal conforme à la revendication 8 et un serveur de diffusion de programmes audiovisuels destiné à fournir audit terminal des informations relatives auxdits programmes.

10. Programme d'ordinateur **caractérisé en ce qu'**il comprend des instructions de code de programme pour la mise en oeuvre du procédé selon la revendication 1 lorsque ce programme est exécuté par un processeur.
